# DEMANDE DE BREVET EUROPEEN

(11) **EP 1 211 777 A2**
(43) Date de publication de la demande: **05.06.2002**
(21) Numéro de dépôt: 01402562.1
(22) Date de dépôt: 04.10.2001
(51) Int. Cl.: H02J 7/00

(54) **Bloc batterie avec un contrôleur de charge intégré**

(30) Priorité: 27.11.2000 FR 0015264
(71) Demandeur: ALCATEL, 75008 Paris (FR)
(72) Inventeur: Maloizel, Serge, 16730 Trois Palis (FR)
(74) Mandataire: Laroche, Danièle

(57) **Abrégé**

Le bloc batterie comporté un accumulateur (AC) avec un circuit de contrôle de charge intégré (CC). Dans ce bloc batterie, le circuit de contrôle de charge (CC) comprend un interrupteur (S) agencé pour interdire ou autoriser le passage du courant de charge (lc) dans l'accumulateur (AC), ledit interrupteur (S) étant piloté par un système de mesure d'au moins une grandeur physique (T1, Tn, Vb) représentative de l'état de l'accumulateur (AC), de manière à commander des ouvertures et fermetures successives de l'interrupteur (S) pour hacher ledit courant de charge (lc) si ladite grandeur physique mesurée franchit un seuil prédéterminé. Avec un tel agencement, la fin de charge de l'accumulateur est optimisée par le bloc batterie lui-même, de sorte qu'un simple générateur de courant constant est suffisant pour charger l'accumulateur dans des conditions satisfaisantes.

## Description

L'invention concerne un bloc batterie comportant un accumulateur avec un circuit de contrôle de charge intégré.

L'invention s'applique plus particulièrement aux blocs batteries alcalins destinés à être chargés à courant constant, tels que ceux comprenant par exemple un accumulateur Nickel Cadmium constitué d'une ou plusieurs cellules.

Avec de tels accumulateurs, le fait d'abaisser progressivement la valeur du courant de charge en fin de charge permet d'augmenter significativement la durée de vie du bloc batterie. Pour assurer un tel profil de charge, on a classiquement recours à un chargeur externe conçu pour l'accumulateur considéré, à savoir capable de détecter un état de fin de charge pour déclencher une baisse progressive du courant de charge qu'il génère. Un tel chargeur est ainsi dépendant des caractéristiques du bloc batterie auquel il est associé, ce qui limite sa polyvalence et augmente son coût de fabrication.

Il est connu du brevet US 5 557 188 un régulateur capable d'évaluer l'état de charge de l'accumulateur auquel il est associé en enregistrant des données telles que le courant entrant et le courant sortant de l'accumulateur, la température, ainsi qu'un jeu de paramètres propres au bloc batterie. Ce régulateur est en outre capable de communiquer avec un système externe en vue notamment d'être piloté par celui-ci pour par exemple réaliser selon le cas de figure une charge rapide ou lente. Un tel régulateur a un coût de fabrication élevé qui est viable pour certaines applications particulières telles que l'alimentation d'un ordinateur portable, mais ne s'avère pas satisfaisant dans des applications plus simples comme par exemple l'alimentation d'un téléphone mobile.

Le but de l'invention est de remédier à ces inconvénients en proposant un agencement de circuit de contrôle de charge suffisamment simple pour être intégré à un bloc batterie avec un faible surcoût.

A cet effet, l'invention a pour objet un bloc batterie comportant un accumulateur avec un circuit de contrôle de charge intégré comprenant un interrupteur agencé pour interdire ou autoriser le passage du courant de charge dans l'accumulateur, caractérisé en ce que ledit interrupteur est piloté par un système de mesure d'au moins une grandeur physique représentative de l'état de l'accumulateur, de manière à commander des ouvertures et fermetures successives de l'interrupteur pour hacher ledit courant de charge si ladite grandeur physique mesurée franchit un seuil prédéterminé, et en ce que sur franchissement dudit seuil prédéterminé, le système de mesure pilote l'interrupteur de manière à hacher le courant de charge selon un premier rapport cyclique pendant un intervalle de temps prédéterminé pour homogénéiser la charge de l'accumulateur, puis selon un second rapport cyclique inférieur au premier rapport cyclique pour établir un courant d'entretien destiné à compenser une autodécharge de l' accumulateur.

Une telle construction fait que le bloc batterie est capable de gérer lui-même l'intensité du courant qui traverse l'accumulateur pour optimiser les conditions de charge sans avoir recours à un chargeur spécifique. Avec cet agencement, le bloc batterie est à un état de charge optimal tant qu'il est connecté à un chargeur.

Selon un mode de réalisation particulier de l'invention, le système de mesure comprend un pont diviseur de tension, et/ou un ou plusieurs capteurs de température pour qu'une grandeur physique représentative de l'état de l'accumulateur soit une tension de l'accumulateur et/ou une température de l'accumulateur et/ou une variation de température et/ou une variation de tension de l'accumulateur. Avec cet agencement, l'état de l'accumulateur peut être mieux évalué par le bloc batterie, pour détecter plus finement un état de fin de charge.

Selon un autre mode de réalisation particulier, un thermostat est interposé entre ledit interrupteur et ledit accumulateur pour interdire l'entrée d'un courant de charge dans l'accumulateur en cas d'élévation de la température de l'accumulateur et de défaillance du système de mesure. De cette manière, le bloc batterie selon l'invention est sécurisé en cas de défaillance du système de mesure qu'il comprend.

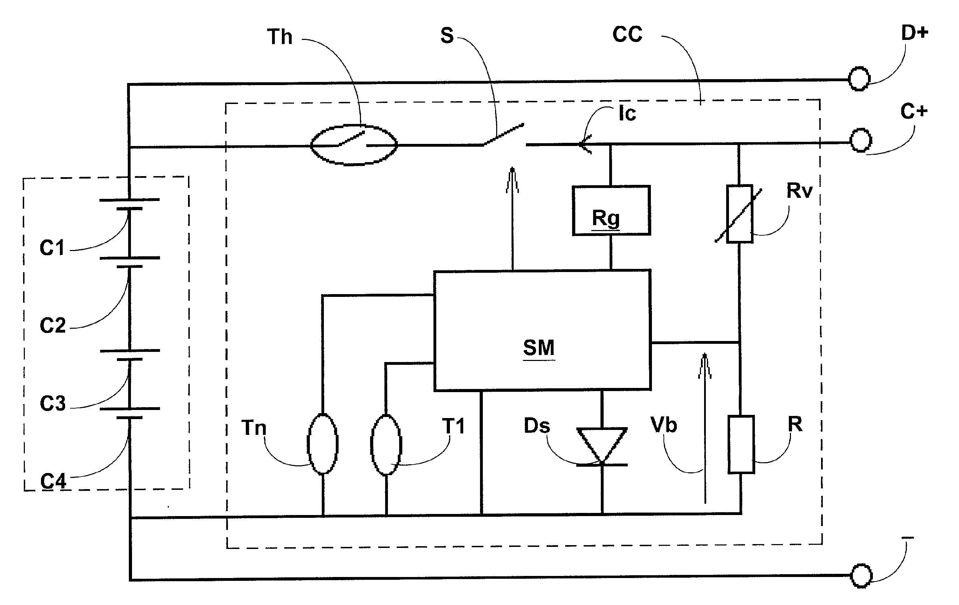

L'invention sera maintenant décrite plus en détail, et en référence au dessin annexé qui en illustre une forme de réalisation à titre d'exemple non limitatif.

La figure unique est une représentation schématique du bloc batterie selon l'invention.

Le bloc batterie selon l'invention qui est représenté sur la figure unique comprend un circuit de contrôle CC intégré, qui est connecté aux bornes d'un accumulateur AC. Cet accumulateur AC est ici constitué de quatre cellules C1, C2, C3, C4, connectées en série, mais l'invention s'applique à tout type d'association de cellule classiquement usité dans le domaine des accumulateurs.

Ce bloc batterie selon l'invention comprend une borne négative repérée " - ", une borne positive de décharge D+, et une borne de charge C+, de sorte qu'il est prévu de connecter un chargeur aux bornes C+ et " - ", et un récepteur aux bornes D+ et " - ". Plus particulièrement, les bornes D+ et " - " sont directement connectées aux polarités de l'accumulateur, et la borne de charge C+ est reliée à l'accumulateur AC par l'intermédiaire du circuit de contrôle CC. Le circuit de contrôle CC comprend un interrupteur S agencé pour interdire ou autoriser le passage d'un courant de charge Ic depuis la borne de charge C+ vers l'accumulateur AC.

L'interrupteur S est piloté par un système de mesure SM que comprend le circuit de contrôle, de sorte que le système de mesure est capable de commander des ouvertures et des fermetures successives de l'interrupteur S pour hacher un courant de charge lc appliqué par un chargeur au bloc batterie. Avec cet agencement, il est donc possible de hacher un courant lc appliqué par un chargeur sur la borne de charge C+ pour diminuer la valeur moyenne du courant traversant l'accumulateur en vue de suivre un profil de charge spécifique de l'accumulateur. Ce système de mesure SM est connecté à la borne de charge C+ par l'intermédiaire d'un circuit de régulation Rg destiné à lui fournir une tension constante, et à la borne négative " - ". Le circuit de contrôle CC comprend un pont diviseur de tension constitué de deux résistances R et Rv connectées en série entre la borne C+ et la borne " - ", de sorte qu'une tension Vb apparaissant au niveau entre R et Rv est proportionnelle à la tension de l'accumulateur AC. Ainsi, le système de mesure qui est connecté à R et Rv peut lire la tension de l'accumulateur, en vue de hacher le courant de charge dès que cette tension franchit une valeur seuil prédéterminée. La résistance Rv est une résistance variable, de manière à pouvoir régler le facteur de division du pont diviseur en fonction de l'accumulateur. La valeur seuil est une valeur préenregistrée dans le système de mesure SM qui pourra être par exemple un microcontrôleur comprenant des moyens de mémorisation et un ou plusieurs convertisseurs analogique/numérique pour lire des informations fournies par les capteurs auxquels il est connecté, comme la tension Vb précitée.

Le système SM est ainsi capable de mesurer une ou plusieurs grandeurs physiques représentatives de l'état de charge de l'accumulateur AC en vue de commander le hachage du courant de charge lorsque l'une des grandeurs physiques franchit un seuil prédéfini. Ces grandeurs physiques pourront être la tension de l'accumulateur comme cela a été décrit ci-dessus, ou encore des températures comme cela sera détaillé plus bas. En variante, lorsque l'une des grandeurs physiques franchit un seuil, le circuit de mesure SM pourra être programmé pour commander le hachage du courant selon deux étapes successives. Pendant un intervalle de temps prédéterminé, le courant sera haché avec un premier rapport cyclique pour favoriser une homogénéisation de la charge de l'accumulateur, puis le courant sera haché avec un second rapport cyclique inférieur au premier rapport cyclique pour produire un courant d'entretien destiné à compenser l'autodécharge de l'accumulateur. Plus particulièrement, pendant l'intervalle de temps prédéterminé, l'utilisation d'un courant plus faible que le courant de charge nominal permet à différentes cellules d'un accumulateur alcalin d'équilibrer leurs charges. Avec cette variante, la charge de l'accumulateur est homogénéisée, et l'accumulateur reste à un niveau de charge optimal tant qu'il est connecté à un chargeur.

Pour évaluer l'état de charge de l'accumulateur, le système de mesure SM pourra être connecté à des capteurs de température T1, Tn tels que représentés sur la figure unique, en vue d'acquérir la température de l'accumulateur en différents points de celui-ci. Ainsi, le système SM est capable de mesurer plusieurs grandeurs physiques caractéristiques de l'état de l'accumulateur comme les températures et les variations de températures déduites des informations fournies par chaque capteur.

Plus particulièrement, le système de mesure pourra être programmé pour calculer les valeurs des variations de température dT/dt de chaque capteur T1, Tn, les températures de chaque capteur, et la tension de l'accumulateur AC, et tester continuellement ces valeurs afin de déclencher le hachage du courant de charge dès que l'une de ces valeurs franchit un seuil qui lui est associé.

Dans une optique de sécurisation, il est prévu de monter un thermostat Th entre l'interrupteur S et l'accumulateur AC pour interdire l'entrée d'un courant de charge lc dans l'accumulateur AC en cas d'élévation de la température de l'accumulateur et de défaillance du système de mesure SM. Le circuit de contrôle du bloc batterie selon l'invention comprend encore un voyant Ds destinée à indiquer l'état de charge et
notamment qu'une charge est en cours ou que le bloc batterie est chargé.

## Revendications

1. Un bloc batterie comportant un accumulateur (AC) avec un circuit de contrôle de charge intégré (CC) comprenant un interrupteur (S) agencé pour interdire ou autoriser le passage du courant de charge (lc) dans l'accumulateur (AC), **caractérisé en ce que** ledit interrupteur (S) est piloté par un système de mesure d'au moins une grandeur physique (T1, Tn, Vb) représentative de l'état de l'accumulateur (AC), de manière à commander des ouvertures et fermetures successives de l'interrupteur (S) pour hacher ledit courant de charge (Ic) si ladite grandeur physique mesurée franchit un seuil prédéterminé, et **en ce que** sur franchissement dudit seuil prédéterminé, le système de mesure pilote l'interrupteur (S) de manière à hacher le courant de charge (lc) selon un premier rapport cyclique pendant un intervalle de temps prédéterminé pour homogénéiser la charge de l'accumulateur (AC), puis selon un second rapport cyclique inférieur au premier rapport cyclique pour établir un courant d'entretien destiné à compenser une autodécharge de l' accumulateur (AC).

2. Le bloc batterie selon la revendication 1, dans lequel le système de mesure comprend un pont diviseur de tension (Rv, R) pour qu'une grandeur physique représentative de l'état de l'accumulateur (AC) soit une tension (Vb) de l'accumulateur (AC).

3. Le bloc batterie selon la revendication 1 ou 2, dans lequel le système de mesure comprend un ou plusieurs capteurs de température (T1, Tn) et dans lequel une grandeur physique représentative de l'état de l'accumulateur (AC) est la température de l'accumulateur (AC).

4. Le bloc batterie selon la revendication 3, dans lequel une grandeur physique représentative de l'état de l'accumulateur (AC) est la variation de la température de l'accumulateur (AC) dans le temps.

5. Le bloc batterie selon l'une des revendications 1, 2, 3 ou 4, dans lequel un thermostat (Th) est interposé entre ledit interrupteur (S) et ledit accumulateur (AC) pour interdire l'entrée d'un courant de charge (Ic) dans l'accumulateur (AC) en cas d'élévation de la température de l'accumulateur et de défaillance du système de mesure (SM).
